# FASCICULE DE BREVET EUROPEEN

(11) **EP 2 120 388 B1**
(45) Date de publication et mention de la délivrance du brevet: **04.12.2013**
(21) Numéro de dépôt: 09160396.9
(22) Date de dépôt: 15.05.2009
(51) Int. Cl.: H04L 9/08, H04L 9/32

(54) **Vérification d'intégrité d'une clé de chiffrement**
Überprüfung der Integrität eines kryptographischen Schlüssels
Integrity test of an encryption key

(30) Priorité: 16.05.2008 FR 0853198
(43) Date de publication de la demande: 18.11.2009
(73) Titulaire: STMicroelectronics (Rousset) SAS, 13790 Rousset (FR)
(72) Inventeur: Liardet, Pierre-Yvan, 13790, PEYNIER (FR); Teglia, Yannick, 13011, MARSEILLE (FR)
(74) Mandataire: de Beaumont, Michel

(56) Documents cités:
- WO-A-2008/079524
- US-A- 4 926 475

## Description

### Domaine de l'invention

La présente invention concerne de façon générale les circuits électroniques et, plus particulièrement, les unités de traitement de données mettant en oeuvre des algorithmes de chiffrement ou de déchiffrement. L'invention concerne plus particulièrement les mécanismes de vérification d'intégrité d'une clé manipulée par de tels algorithmes.

### Exposé de l'art antérieur

Lorsque l'on utilise une unité de traitement (typiquement un cryptoprocesseur) pour mettre en oeuvre un algorithme de chiffrement, on cherche à vérifier que la clé manipulée n'est pas modifiée (accidentellement ou volontairement), soit lors de son transfert vers le cryptoprocesseur depuis un circuit externe, soit une fois dans celui-ci alors qu'elle est contenue dans un registre spécifique de ce cryptoprocesseur.

Pour pallier à une modification lors du transfert, une solution est de recharger la clé dans le cryptoprocesseur le plus souvent possible, généralement à chaque nouveau chiffrement, ou périodiquement.

Pour vérifier l'intégrité de la clé une fois qu'elle est dans le cryptoprocesseur, le plus simple serait de lire cette clé pour la contrôler à l'extérieur du cryptoprocesseur. Cependant, pour protéger la clé contre d'éventuelles tentatives de piratage, l'élément de mémorisation temporaire (registre) qui contient la clé n'est accessible depuis l'extérieur du cryptoprocesseur qu'en écriture. La vérification d'intégrité consiste alors à vérifier la cohérence de résultats obtenus par deux calculs distincts utilisant la clé contenue dans le cryptoprocesseur. Ces deux calculs sont soit deux chiffrements d'un même message avec la clé, soit un chiffrement suivi d'un déchiffrement.

Toutefois, si un des bits de la clé est modifié dans le registre de clé et que ce registre n'est pas modifié entre les deux calculs (que ceux-ci soient successifs ou en parallèle) ou s'il subit la même modification lors des deux chargements, le mécanisme de vérification est incapable de s'en apercevoir.

Le document US 4 926 475 A (SPIOTTA MARK G [US] ET AL), 15 mai 1990 (1990-05-15), décrit un procédé et un circuit électronique correspondant pour vérifier l'intégrité d'une clé mise en oeuvre dans un algorithme symétrique de chiffrement ou de déchiffrement de données (on cherche donc à vérifier que ladite clé n'est pas modifiée, accidentellement ou volontairement). Le procédé comporte une vérification de la cohérence entre deux exécutions distinctes de l'algorithme utilisant la même clé.

### Résumé

Il serait souhaitable de disposer d'un mécanisme de vérification d'intégrité d'une clé manipulée par un circuit de chiffrement, qui pallie tout ou partie des inconvénients des mécanismes de vérification d'intégrité usuels.

Il serait également souhaitable de détecter une modification de la clé dans le registre interne du cryptoprocesseur, même si ce registre n'est pas accessible en lecture depuis l'extérieur.

Il serait également souhaitable de détecter une inversion d'un ou plusieurs bits de la clé dans un mécanisme de vérification mettant en oeuvre deux exécutions du calcul (double chiffrement, double déchiffrement, chiffrement suivi d'un déchiffrement ou l'inverse).

Pour atteindre tout ou partie de ces objets ainsi que d'autres, il est prévu un procédé de vérification d'intégrité d'une clé mise en oeuvre dans un algorithme symétrique de chiffrement ou de déchiffrement, comportant les étapes de :
complémenter à un au moins la clé ; et
vérifier la cohérence entre deux exécutions de l'algorithme, respectivement avec la clé et avec la clé complémentée à un.

Selon un mode de réalisation, le résultat d'une première exécution de l'algorithme avec une donnée et la clé, ou le complément à un de ce résultat, est comparé au complément à un du résultat d'une deuxième exécution de l'algorithme avec la donnée complémentée à un et la clé complémentée à un, respectivement au résultat de cette deuxième exécution.

Selon un mode de réalisation, une première exécution d'un algorithme de chiffrement ou de déchiffrement d'une donnée avec la clé est suivie d'une exécution d'un algorithme de déchiffrement ou de chiffrement correspondant avec le résultat complémenté de la première exécution et la clé complémentée.

Selon un mode de réalisation, le résultat de la deuxième exécution ou son complément à un est comparé au complément à un de la donnée ou à la donnée.

Selon un mode de réalisation, la vérification compare deux exécutions successives.

Selon un mode de réalisation, la vérification compare deux exécutions parallèles.

Selon un mode de réalisation, l'algorithme utilisé est le DES ou une de ses variantes.

Il est également prévu un circuit électronique adapté pour la mise en oeuvre du procédé de vérification.

Il est également prévu un système incluant un circuit électronique de chiffrement ou de déchiffrement et un circuit électronique de traitement des données chiffrées ou de données déchiffrées.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique d'une carte à puce du type à laquelle s'applique à titre d'exemple la présente invention ;
la figure 2 est un schéma bloc d'un système utilisant une unité de chiffrement/déchiffrement de type cryptoprocesseur ;
la figure 3 est un schéma bloc partiel d'un circuit intégrant une unité de chiffrement/déchiffrement et une unité centrale de traitement ;
les figures 4A et 4B sont des schémas blocs illustrant un exemple d'algorithme de chiffrement et de déchiffrement auquel appliquer une vérification d'intégrité ;
la figure 5 illustre, de façon très schématique et sous forme de blocs, un mode de mise en oeuvre du mécanisme de vérification ; et
la figure 6 illustre, de façon très schématique et sous forme de blocs, un autre mode de mise en oeuvre du mécanisme de vérification.

### Description détaillée

De mêmes éléments ont été désignés par de mêmes références aux différentes figures. Par souci de clarté, seuls les étapes et éléments utiles à la compréhension de l'invention ont été représentés et seront décrits. En particulier, l'exploitation faite des données à chiffrer ou des données chiffrées n'a pas été détaillée, l'invention étant compatible avec toute exploitation usuelle. De plus, les éléments de l'unité de traitement cryptographique ou des autres circuits n'ont pas été détaillés, l'invention étant là encore compatible avec les structures habituelles. On fera par la suite référence au terme chiffrement pour désigner, sauf précision contraire, un chiffrement et/ou un déchiffrement qui sont des mécanismes similaires (application d'un algorithme à des données et une ou plusieurs clés).

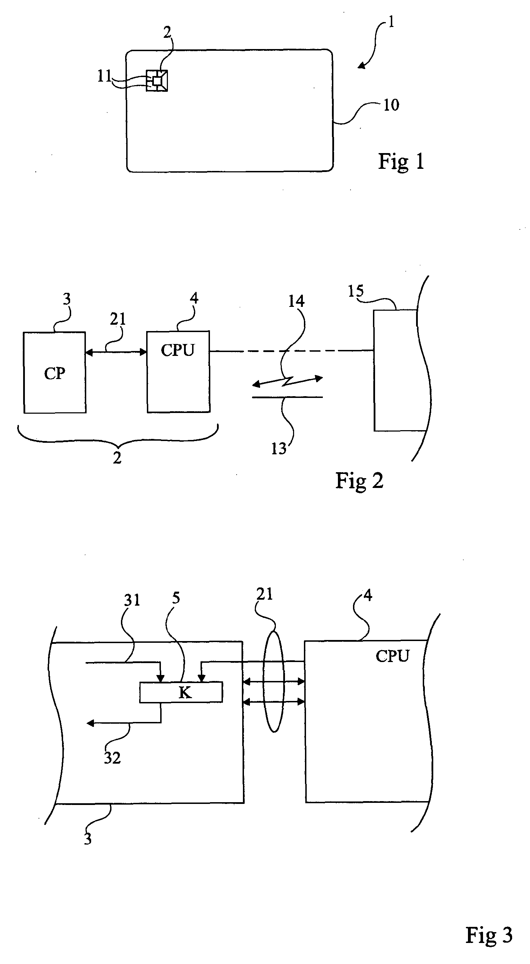

La figure 1 est une représentation schématique d'une carte à puce 1 du type à laquelle s'appliquent à titre d'exemple les modes de réalisation qui vont être décrits. Une telle carte 1 est constituée d'un support 10 par exemple en matière plastique qui porte ou inclut un ou plusieurs circuits intégrés 2. Le ou les circuits 2 sont susceptibles de communiquer avec l'extérieur de la carte (par exemple, avec un terminal de lecture ou de lecture-écriture) à l'aide de contacts 11 ou par des éléments d'émission-réception sans contact (non représentés) à la manière d'un transpondeur électromagnétique. Le ou les circuits 2 incluent au moins une unité de chiffrement (généralement appelée cryptoprocesseur) capable d'exécuter des calculs de chiffrement et/ou de déchiffrement à partir d'une ou plusieurs clés chargées dans l'unité de traitement.

L'utilisation d'algorithmes de chiffrement trouve de nombreuses applications dans l'industrie électronique, qu'il s'agisse des systèmes à carte à puce, des systèmes de télévision à péage, des systèmes de communications chiffrées, etc. Dans tous les cas, on retrouve une unité de traitement algorithmique capable de mettre en oeuvre des mécanismes de chiffrement et/ou de déchiffrement.

La figure 2 est une représentation sous forme de blocs d'un système utilisant un cryptoprocesseur 3 (CP). Ce cryptoprocesseur est un circuit intégré considéré comme inviolable et qui met en oeuvre un ou plusieurs algorithmes de chiffrement ou de déchiffrement appliqués à des données qu'il reçoit de l'extérieur, en utilisant une ou plusieurs clés qu'il contient ou qu'il reçoit de l'extérieur. Le cryptoprocesseur 3 est, par exemple, susceptible de communiquer avec une unité de traitement 4 (par exemple une unité centrale de traitement-CPU) d'un circuit 2 intégrant les deux éléments 3 et 4 (et généralement d'autres circuits non représentés tels que des mémoires volatiles et non, une interface d'entrée-sortie, etc.). Le circuit 2 est capable de communiquer par liaison filaire 13 ou par liaison sans fil 14 avec un dispositif séparé 15, par exemple, un circuit d'exploitation des données chiffrées ou déchiffrées.

La figure 3 est un détail du schéma de la figure 2 faisant apparaître, dans le circuit 3, un élément de mémorisation temporaire interne 5 (typiquement un registre). Bien entendu, l'unité 3 comporte généralement plusieurs registres pour stocker temporairement les données chiffrées, à chiffrer et autres variables, ainsi que d'autres éléments lui permettant d'exécuter l'algorithme de chiffrement (logique câblée, mémoires, unité de traitement d'instructions logicielles, etc.). On se préoccupe ici d'un registre particulier qui est destiné à contenir la clé de chiffrement K. On désignera par la suite ce registre 5, registre de clé. Le cas échéant, l'unité 3 contient plusieurs registres de clé. Une particularité du ou des registres de clés est qu'ils ne sont susceptibles d'être lus que par l'unité 3 (liaison 32) et pas par l'extérieur. Le chargement de la ou des clés peut s'effectuer depuis l'extérieur (liaison 21), par exemple, par l'unité centrale 4 du circuit 2 ou depuis l'intérieur (liaison 31) du cryptoprocesseur 3 (par exemple, en cas de traitements préalables sur la clé ou si la clé est contenue dans un élément de mémorisation du circuit 3). Une tentative d'accès au registre 5 en lecture par l'unité 4 se solde, par exemple, par un blocage du système, par un refus d'accès, par une lecture erronée (ne donnant pas la valeur contenue dans le registre 5), etc. Le contenu du registre 5 est lu par le cryptoprocesseur 3 à chaque fois qu'il a besoin de la clé pour une opération de chiffrement ou de déchiffrement.

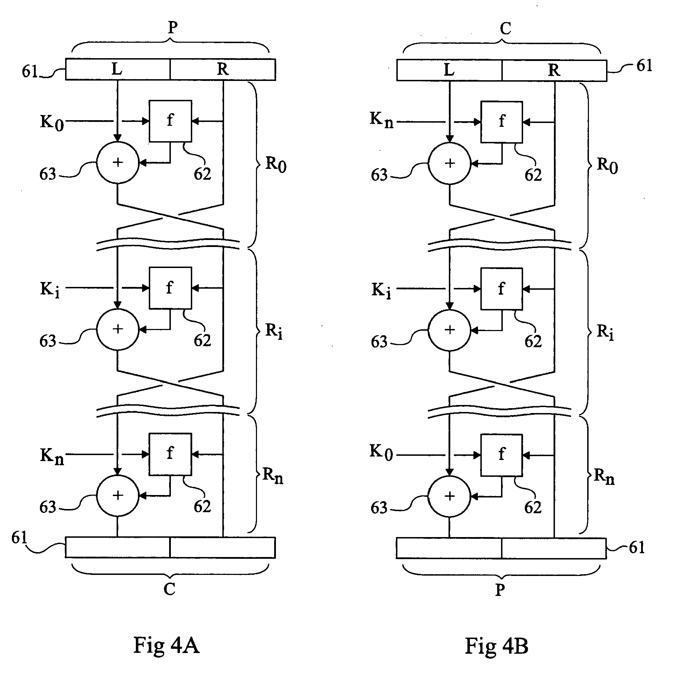

Les figures 4A et 4B illustrent respectivement, sous forme de blocs, l'architecture d'algorithmes de chiffrement et de déchiffrement du type auquel s'applique, à titre d'exemple, la vérification d'intégrité.

Les algorithmes concernés sont des algorithmes dits de Feistel. De tels algorithmes effectuent un chiffrement symétrique, par blocs, et se caractérisent par des opérations de chiffrement et de déchiffrement similaires, voire identiques, ne nécessitant qu'une inversion de l'ordre d'utilisation de clés (ou sous-clés) extraites de la clé contenue dans le registre de clé. Le plus souvent, les réseaux ou schémas de Feistel combinent plusieurs tours (rounds) d'opérations identiques incluant une fonction de diffusion (par exemple, une permutation des bits), une fonction non linéaire (par exemple, de type substitution) produisant un effet de confusion, et un mélange linéaire utilisant une combinaison bit à bit (XOR). Parmi les algorithmes de Feistel, on choisira ceux qui respectent la propriété que le résultat du chiffrement d'un message par une clé est égal au complément à un du résultat du chiffrement du complément à un du message par le complément à un de la clé.

Un exemple d'algorithme de Feistel qui respecte cette propriété est l'algorithme DES et ses différentes variantes. D'autres exemples sont les algorithmes connus sous les noms LOKI et GHOST.

L'opération de chiffrement (figure 4A) consiste à soumettre un message à chiffrer P (plain text) à des opérations successives. Le message P est séparé en deux parties de tailles identiques (désignées arbitrairement, partie droite R et partie gauche L). Ce message est contenu dans un registre 61 du circuit 3 (ou dans deux registres respectivement affectés aux parties droite et gauche). L'algorithme s'effectue en n+1 tours Ri (i étant compris entre 0 et n>1). A chaque tour, la partie droite R du registre 61 est soumise (bloc 62) à une fonction non linéaire f avec une sous-clé Ki (i compris entre 0 et n). Cette sous-clé est obtenue à partir d'une clé de chiffrement globale (typiquement, la clé K contenue dans le registre 5 - figure 3). Le résultat de la fonction de chiffrement est mélangé (addition bit à bit 63) avec la partie gauche L du registre qui correspond au résultat du tour précédent (du message P pour le premier tour R₀). Enfin, les parties droite R et gauche L sont permutées pour le tour suivant. A la fin du n^{ième} tour, on obtient le message chiffré C. Le dernier tour Rₙ ne comporte généralement pas de permutation des parties droite et gauche. Le message C est généralement contenu dans le registre 61 ayant servi durant tout le calcul. La même cellule de calcul (fonction 62 et combineur 63) peut être utilisée pour chaque tour.

L'opération de déchiffrement (figure 4B) consiste à soumettre un message chiffré C (ciphered text) aux n tours Ri mais en utilisant les sous-clés dans un ordre inverse (commencer par la clé Kₙ pour finir par la clé K₀), afin d'obtenir le message en clair P.

Dans le cas de l'algorithme DES le premier tour est précédé d'une opération de mélange des bits (permutation) et le dernier tour est suivi de l'opération inverse.

Pour vérifier l'intégrité de la clé K stockée dans le registre 5, une solution simple serait de pouvoir relire cette clé à des fins de vérification. Toutefois, comme cela a déjà été indiqué, le registre 5 n'est pas accessible de l'extérieur autrement qu'en écriture. Par conséquent, la vérification d'intégrité doit utiliser un mécanisme indirect.

On utilise donc la clé K deux fois successivement ou en parallèle pour effectuer deux opérations de chiffrement dont on compare l'identité des résultats, ou une opération de chiffrement suivie d'une opération de déchiffrement et l'on vérifie alors l'identité entre les messages d'origine et final.

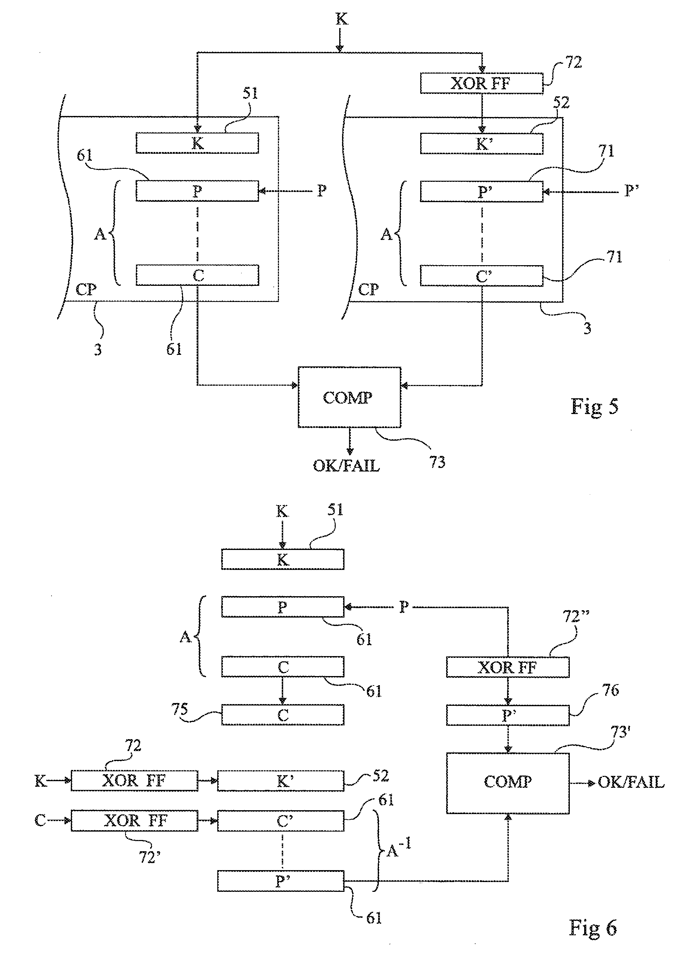

La figure 5 est un schéma bloc d'un mode de réalisation d'un mécanisme de vérification d'intégrité d'une clé K. Dans cet exemple, la clé K est d'une part chargée dans un registre de clé 51 dans sa forme provenant de l'extérieur et d'autre part soumise à une opération de complément à un bit à bit (bloc 72, XOR FF) pour être chargée, dans sa forme complémentée K', dans un deuxième registre de clé 52 du même type que le premier. L'opération de complément à un peut être effectuée par l'unité centrale provoquant le chargement dans les registres 51 et 52 ou, si son jeu d'instructions le lui permet, par le cryptoprocesseur 3. Les registres 51 et 52 sont accessibles uniquement en écriture depuis l'extérieur, leur lecture ne pouvant intervenir qu'au sein du circuit 3. Les clés K et K' sont utilisées pour chiffrer (algorithme A) un message P de données avec la clé K et le complément à un P' de ce message avec la clé K'. Dans l'exemple de la figure 5, on suppose que l'application de l'algorithme A au message P s'effectue dans un registre 61 et que son application au message P' s'effectue dans un registre 71. En variante, un même registre 61 est utilisé et le premier résultat obtenu est stocké dans un autre élément de mémorisation pendant le calcul de l'autre chiffrement. La cohérence entre les textes chiffrés C et C' obtenus en fin d'application de l'algorithme est comparée (bloc 73, COMP), c'est-à-dire que l'un des résultats est complémenté à un, puis comparé à l'autre pour vérifier leur identité. On détecte ainsi un défaut d'intégrité de la clé (OK/FAIL), c'est-à-dire une modification d'au moins un bit de la clé entre les deux exécutions. La comparaison est, de préférence, effectuée par le cryptoprocesseur. Un défaut d'intégrité est utilisé pour empêcher le résultat chiffré de sortir du cryptoprocesseur, ou entreprendre toute autre action appropriée en cas de suspicion de modification de la clé accidentelle ou volontaire (attaque).

Cette mise en oeuvre tire profit de la propriété indiquée précédemment (pour tout message P et toute clé K, le complément à un C' du résultat C de l'algorithme de chiffrement A est égal au résultat de l'application de cet algorithme au message complémenté P' avec la clé complémentée K'). Cette propriété se traduit par le fait que la fonction non linéaire f respecte que le résultat (f(X, Ki)) de son application à une donnée X avec une sous-clé Ki est égal au résultat (f(X', Kᵢ')) de son application aux compléments à un X' de la donnée et Ki' de la sous-clé. Parmi les algorithmes de Feistel, on choisira donc ceux dont la fonction respecte cette propriété. C'est notamment le cas des algorithmes DES, LOKI et GHOST, mais pas de ceux connus sous les noms RC5, Twofish, Blowfish ou Camelia.

Un intérêt d'utiliser le complément à un est qu'une inversion d'un bit dans la clé K ou dans son complément à un K' ne donnera pas le même résultat. Par conséquent, une modification accidentelle ou volontaire d'un bit de la clé dans un des registres de clé 51 ou 52 peut être détectée par le mécanisme de vérification. De plus, une modification d'un même bit dans les deux registres 51 et 52 faussera également le résultat. Le seul cas où une modification n'est pas détectée est le cas où tous les bits modifiés d'un des registres 51 ou 52 sont également inversés dans l'autre registre 52 ou 51 et que les bits correspondants de la partie droite sont également inversés lors de leur interaction avec les bits de sous-clé utilisés par la fonction f. Un tel cas est toutefois improbable de façon accidentelle et difficile à provoquer de façon volontaire.

La figure 6 illustre une variante dans laquelle, plutôt que de vérifier l'identité entre les résultats C et C', le résultat C du chiffrement est transféré dans un registre 75 et la valeur C du registre 61 est complémentée à un (bloc 72'). Le complément à un C' est alors déchiffré (algorithme A⁻¹) en utilisant la clé K' (clé K complémentée à un - bloc 72) transférée dans le registre de clé 52. Le résultat obtenu doit correspondre au complément à un P' du message d'origine. Par exemple, le message d'origine P est initialement complémenté (bloc 72") et le résultat est stocké dans un registre 76 du circuit 3 dédié à la vérification d'intégrité. Le contenu de ce registre 76 est comparé (bloc 73') au résultat contenu à la fin dans le registre du DES 61.

Les étapes listées ci-dessous illustrent un exemple d'opérations successives en utilisant une même cellule de calcul du DES du circuit 3 (cet exemple correspond à une variante de la figure 5 où un même registre 61 sert aux deux calculs) :
1. Chargement du registre 51 avec la clé K ;
2. Chargement du texte en clair P dans le registre 61 ;
3. Sélection du registre 51 comme registre de clé du DES ;
4. Exécution du DES ;
5. Transfert du contenu, noté C1, du registre 61 dans un élément de mémorisation temporaire (par exemple, un premier registre dédié à la vérification d'intégrité ou un registre de sortie) ;
6. Calcul du complément P' à partir du message P ;
7. Chargement de P' dans le registre 61 ;
8. Calcul du complément K' à partir de la clé K du registre 51 ;
9. Chargement du registre 52 avec la clé K' ;
10. Sélection du registre 52 comme registre de clé du DES ;
11.Exécution du DES ;
12. Transfert du contenu, noté C2, du registre 61 dans un élément de mémorisation temporaire (par exemple, un deuxième registre dédié à la vérification d'intégrité) ;
13. Calcul du complément C1' du contenu C1 du premier registre ; et
14. Vérification que C1' = C2.

Le résultat qui peut être sorti du cryptoprocesseur (placé dans un élément de mémorisation interne, accessible en lecture par l'unité centrale 2 ou autre circuit utilisant le processeur 3) est dans un quelconque des premier et deuxième registres et a été vérifié.

Les étapes listées ci-dessous illustrent un exemple d'opérations successives en utilisant une même cellule de calcul du DES du circuit 3, mais pour effectuer, comme en figure 6, un chiffrement puis un déchiffrement (DES⁻¹) :
1. Chargement du registre 51 avec la clé K ;
2. Chargement du texte en clair P dans le registre 61 ;
3. Sélection du registre 51 comme registre de clé du DES ;
4. Exécution du DES ;
5. Transfert du contenu, noté C1, du registre 61 dans un élément de mémorisation temporaire (par exemple, un premier registre 75 dédié à la vérification d'intégrité ou un registre de sortie) ;
6. Calcul du complément C1' à partir du résultat C1 ;
7. Chargement de C1' dans le registre 61 ;
8. Calcul du complément K' à partir de la clé K du registre 51 ;
9. Chargement du registre 52 (ou en variante du registre 51) avec la clé K' ;
10. Sélection du registre 52 (ou du registre 51 dans la variante) comme registre de clé du DES⁻¹ ;
11.Exécution du DES⁻¹ ;
12. Transfert du contenu, noté P2, du registre 61 dans un élément de mémorisation temporaire (par exemple, un deuxième registre dédié à la vérification d'intégrité) ;
13. Calcul du complément P2' du contenu de ce deuxième registre ; et
14.Vérification que P2' = P.

Le résultat est dans le registre 61 et a été vérifié.

Les étapes listées ci-dessous illustrent un exemple d'opérations successives en utilisant une même cellule de calcul du DES du circuit 3 pour effectuer un chiffrement puis un déchiffrement (DES⁻¹) en supposant que le cryptoprocesseur intègre la fonction de calcul du complément à un :
1. Chargement du registre 51 avec la clé K ;
2. Chargement du texte en clair P dans le registre 61 ;
3. Sélection du registre 51 comme registre de clé du DES ;
4. Exécution du DES ;
5. Transfert du contenu du registre 61 dans un élément de mémorisation temporaire (par exemple, un premier registre dédié à la vérification d'intégrité ou un registre de sortie) ;
6. Calcul du complément du contenu du registre 61 ;
7. Chargement du registre 52 avec la clé K ;
8. Calcul du complément K' du contenu du registre 52 ;
9. Sélection du registre 52 comme registre de clé du DES⁻¹ ;
10.Exécution du DES⁻¹ ;
11. Calcul du complément du contenu du registre 61 ;
12. Transfert du contenu du registre 61 dans un élément de mémorisation temporaire (par exemple, un deuxième registre dédié à la vérification d'intégrité) ;
13. Vérification que ce registre contient le message d'origine P.

Le résultat est dans le premier registre et a été vérifié.

Il est désormais possible de vérifier l'intégrité d'une clé utilisée dans un algorithme de chiffrement de type algorithme de Feistel.

Cette vérification est compatible avec les structures usuelles des cryptoprocesseurs et n'en demande aucune modification (à l'exception, pour certaines variantes, de la fonction de complément à un si l'on souhaite qu'elle soit interne au circuit 3). En particulier, il est toujours possible de choisir entre une vérification parallèle ou série et de partager la cellule de calcul.

On peut s'apercevoir de l'efficacité d'un tel mécanisme de vérification en modifiant, après le chargement de la clé dans le cryptoprocesseur ou à chaque chargement de cette clé, un des bits du registre de clé. Si ce mécanisme a été mis en oeuvre, l'erreur sera détectée. Si un mécanisme de vérification usuel est mis en oeuvre, l'erreur ne sera pas détectée.

Un intérêt supplémentaire de la vérification effectuée est qu'elle ne se contente pas de vérifier l'intégrité de la clé mais, qu'en plus, elle vérifie l'exécution même de l'algorithme de chiffrement. En effet, si une erreur se produit pendant l'exécution de l'algorithme, les résultats ne concorderont pas.

Différents modes de réalisation ont été décrits. Différentes variantes et modifications sont à la portée de l'homme du métier. En particulier, le choix entre une exécution parallèle ou série (exécutions successives) dépend en pratique d'un compromis entre rapidité de traitement et encombrement du cryptoprocesseur. De plus, la mise en oeuvre pratique est à la portée de l'homme du métier à partir des indications fonctionnelles données ci-dessus, que ce soit pour une mise en oeuvre logicielle ou matérielle. En outre, si l'invention a été décrite en relation avec des algorithmes de Feistel, elle s'applique plus généralement à des algorithmes symétriques pour lesquels le résultat du chiffrement d'un message par une clé est égal au complément à un du résultat du chiffrement du complément à un du message par le complément à un de la clé.

## Revendications

1. Procédé de vérification d'intégrité d'une clé (K) mise en oeuvre dans un algorithme symétrique (A) de chiffrement ou de déchiffrement, **caractérisé en ce qu'**il comporte les étapes de :
complémenter à un au moins la clé ; et
vérifier la cohérence entre deux exécutions de l'algorithme (A), respectivement avec la clé et avec la clé complémentée à un (K').

2. Procédé selon la revendication 1, dans lequel le résultat (C) d'une première exécution de l'algorithme (A) avec une donnée (P) et la clé (K), ou le complément à un (C') de ce résultat, est comparé au complément à un (C) du résultat (C') d'une deuxième exécution de l'algorithme avec la donnée complémentée à un (P') et la clé complémentée à un (K'), respectivement au résultat (C) de cette deuxième exécution.

3. Procédé selon la revendication 1, dans lequel une première exécution d'un algorithme de chiffrement (A) ou de déchiffrement d'une donnée (P) avec la clé (K) est suivie d'une exécution d'un algorithme de déchiffrement (A⁻¹) ou de chiffrement correspondant avec le résultat complémenté (C') de la première exécution et la clé complémentée (K').

4. Procédé selon la revendication 3, dans lequel le résultat de la deuxième exécution ou son complément à un est comparé au complément à un (P') de la donnée ou à la donnée (P).

5. Procédé selon l'une quelconque des revendications 1 à 4, dans lequel la vérification compare deux exécutions successives.

6. Procédé selon la revendication 1 ou 2, dans lequel la vérification compare deux exécutions parallèles.

7. Procédé selon l'une quelconque des revendications 1 à 6, dans lequel l'algorithme utilisé est le DES ou une de ses variantes.

8. Circuit électronique adapté pour la mise en oeuvre du procédé de vérification conforme à l'une quelconque des revendications 1 à 7.

9. Système incluant un circuit électronique (3) de chiffrement ou de déchiffrement et un circuit électronique (2) de traitement des données chiffrées ou de données déchiffrées, dans lequel les circuits sont conformes au circuit selon la revendication 8.

## Patentansprüche

1. Verfahren zur Verifikation der Integrität eines Schlüssels (K), der bei einem symmetrischen Algorithmus (A) zur Verschlüsselung oder Entschlüsselung genutzt wird, **dadurch gekennzeichnet, dass** das Verfahren die folgenden Verfahrensschritte aufweist:
Bilden eines Einerkomplements wenigstens des Schlüssels; und
Verifizieren der Kohärenz zwischen zwei Durchführungen des Algorithmus (A) respektive mit dem Schlüssel und mit dem Einerkomplement des Schlüssels (K').

2. Verfahren nach Anspruch 1, wobei das Ergebnis (C) einer ersten Durchführung des Algorithmus (A), die mit einem Datenwert (P) und dem Schlüssel (K) erfolgt, oder das Einerkomplement (C') dieses Ergebnisses mit einem Einerkomplement (C) des Ergebnisses (C') einer zweiten Durchführung des Algorithmus, die mit einem Einerkomplement des Datenwerts (P') und einem Einerkomplement des Schlüssels (K') erfolgt, verglichen wird, respektive mit dem Ergebnis (C) dieser zweiten Durchführung verglichen wird.

3. Verfahren nach Anspruch 1, wobei auf eine erste Durchführung eines Verschlüsselungs- oder Entschlüsselungsalgorithmus (A), die mit einem Datenwert (P) und dem Schlüssel (K) erfolgt, eine korrespondierende Durchführung eines Entschlüsselungs- oder Verschlüsselungsalgorithmus (A⁻¹), der mit dem Einerkomplement (C') des Ergebnisses der ersten Durchführung und mit dem Einerkomplement des Schlüssels (K') erfolgt, folgt.

4. Verfahren nach Anspruch 3, wobei das Ergebnis der zweiten Durchführung oder das Einerkomplement dieses Ergebnisses mit dem Einerkomplement (P') des Datenwerts oder dem Datenwert (P) verglichen wird.

5. Verfahren nach einem der Ansprüche 1 bis 4, wobei bei der Verifikation zwei konsekutive Durchführungen verglichen werden.

6. Verfahren nach Anspruch 1 oder 2, wobei bei der Verifikation zwei parallele Durchführungen verglichen werden.

7. Verfahren nach einem der Ansprüche 1 bis 6, wobei der durchgeführte Algorithmus DES oder eines seiner Varianten ist.

8. Elektronische Schaltung, die zur Durchführung des Verfahrens nach einem der Ansprüche 1 bis 7 geeignet ist.

9. System, das eine elektronische Schaltung (3) zur Verschlüsselung oder Entschlüsselung und eine elektronische Schaltung (2) zur Verarbeitung von verschlüsselten Daten oder entschlüsselten Daten aufweist, wobei die Schaltungen den Schaltungen gemäß Anspruch 8 entsprechen.

## Claims

1. A method for verifying the integrity of a key (K) used in a symmetrical ciphering or deciphering algorithm (A), **characterized in that** it comprises the steps of:
complementing to one at least the key; and
verifying the coherence between two executions of the algorithm (A), respectively with the key and with the key complemented to one (K').

2. The method of claim 1, wherein the result (C) of a first execution of the algorithm (A) with a data value (P) and the key (K), or the complement to one (C') of this result, is compared with the complement to one (C) of the result (C') of a second execution of the algorithm with the data value complemented to one (P') and the key complemented to one (K'), respectively with the result (C) of this second execution.

3. The method of claim 1, wherein a first execution of an algorithm (A) of ciphering or deciphering of a data value (P) with the key (K) is followed by an execution of a corresponding deciphering or ciphering algorithm (A⁻¹) with the complemented result (C') of the first execution and the complemented key (K').

4. The method of claim 3, wherein the result of the second execution or its complement to one is compared with the complement to one (P') of the data value or with the data value (P).

5. The method of any of claims 1 to 4, wherein the verification compares two successive executions.

6. The method of claim 1 or 2, wherein the verification compares two parallel executions.

7. The method of any of claims 1 to 6, wherein the used algorithm is the DES or one of its variations.

8. An electronic circuit capable of implementing the verification method of any of claims 1 to 7.

9. A system comprising an electronic ciphering or deciphering circuit (3) and an electronic circuit (2) for processing ciphered data or deciphered data, the circuits being in accordance with claim 8.
